(19) Europäisches Patentamt / European Patent Office / Office européen des brevets

(11) **EP 4 618 030 A1**

(12) **EUROPÄISCHE PATENTANMELDUNG**

(43) Veröffentlichungstag:
**17.09.2025 Patentblatt 2025/38**

(21) Anmeldenummer: **25160010.2**

(22) Anmeldetag: **25.02.2025**

(51) Internationale Patentklassifikation (IPC):
**G06V 10/24** (2022.01)     **G06V 10/774** (2022.01)
**G06V 20/52** (2022.01)

(52) Gemeinsame Patentklassifikation (CPC):
**G06V 10/774; G06V 10/247; G06V 20/52**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **11.03.2024 DE 102024202232**

(71) Anmelder: **Robert Bosch GmbH**
**70442 Stuttgart (DE)**

(72) Erfinder:
• **Troeltzsch, Uwe**
  **51503 Roesrath (DE)**
• **Steuler, Jan Linus**
  **61200 Woelfersheim (DE)**
• **Koelsch, Andreas**
  **86971 Peiting (DE)**
• **Sgarz, Heiko**
  **71229 Leonberg (DE)**
• **Giliard, Anke**
  **70180 Stuttgart (DE)**
• **Frischen, Andreas**
  **71229 Leonberg (DE)**
• **Fiederer, Lukas**
  **72336 Balingen (DE)**
• **Moster, Benjamin**
  **75223 Niefern-Oeschelbronn (DE)**
• **Huschka, Leon**
  **72631 Aichtal (DE)**

(54) **VERFAHREN ZUM ERZEUGEN EINES TRAININGSDATENSATZES**

(57) Die Erfindung betrifft ein Computerimplementiertes Verfahren (300) zum Erzeugen eines Trainingsdatensatzes (143) zum Trainieren einer künstlichen Intelligenz (125) zum Betreiben eines Messgeräts (100), insbesondere eines Wanddiagnosegeräts, umfassend:
Aufnehmen (301) von Sensordaten (103) wenigstens einer Sensoreinheit (101) eines Messgeräts (100);
Ausführen (303) einer Positionsbestimmung des Messgeräts (100) relativ zur Wand (105) und Erzeugen von positionsbehafteten Sensordaten (103) durch ein Positionsermittlungssystem (145);
Labeln (305) der positionsbehafteten Sensordaten (103) unter Berücksichtigung einer Groundtruth-Information und Generieren von gelabelten Sensordaten (103); und
Zusammenfassen (307) der gelabelten Sensordaten (103) zu einem Trainingsdatensatz (143).

Die Erfindung betrifft ferner ein Verfahren (400) zum Trainieren einer künstlichen Intelligenz (125).

**Fig. 1**

EP 4 618 030 A1

**Beschreibung**

Die vorliegende Erfindung betrifft ein Verfahren zum Erzeugen eines Trainingsdatensatzes für ein Training einer künstlichen Intelligenz für ein Wanddiagnosegerät. Die Erfindung betrifft ferner ein Verfahren für ein Training einer künstlichen Intelligenz für ein Wanddiagnosegerät.

Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Erzeugen eines Trainingsdatensatzes für ein Training einer künstlichen Intelligenz eines Wanddiagnosegeräts und ein verbessertes Verfahren für ein Training einer solchen künstlichen Intelligenz.

Die Aufgabe wird durch die Verfahren der unabhängigen Ansprüche gelöst. Vorteilhafte Ausführungsformen sind Gegenstand der abhängigen Ansprüche.

Nach einem Aspekt wird ein Computerimplementiertes Verfahren zum Erzeugen eines Trainingsdatensatzes zum Trainieren einer künstlichen Intelligenz zum Betreiben eines Messgeräts, insbesondere eines Wanddiagnosegeräts, bereitgestellt, wobei das Verfahren umfasst:

Aufnehmen von Sensordaten wenigstens einer Sensoreinheit eines Messgeräts, wobei die Sensordaten eine zu diagnostizierende Wand abbilden;

Ausführen einer Positionsbestimmung des Messgeräts relativ zur Wand und Erzeugen von positionsbehafteten Sensordaten durch ein Positionsermittlungssystem, wobei in der Positionsbestimmung einem jeden aufgenommenem Sensordatum eine Positionsinformation zugeordnet wird, und wobei die Positionsinformation eine Position des Messgeräts relativ zur Wand definiert, in der das Messgerät zu einem Zeitpunkt der Aufnahme des Sensordatums relativ zur Wand positioniert war;

Labeln der positionsbehafteten Sensordaten unter Berücksichtigung einer Groundtruth-Information und Generieren von gelabelten Sensordaten, wobei die Groundtruth-Information wenigstens eine Information bezügliche eines Vorhandenseins des Objekts in der Wand umfasst; und

Zusammenfassen der gelabelten Sensordaten zu einem Trainingsdatensatz.

Hierdurch kann der technische Vorteil erreicht werden, dass ein verbessertes Verfahren zum Erzeugen eines Trainingsdatensatzes zum Trainieren einer künstlichen Intelligenz zum Betreiben eines Messgeräts, insbesondere eines Wanddiagnosegeräts bereitgestellt werden kann. Hierzu werden zunächst Sensordaten wenigstens einer Sensoreinheit eines Messgeräts, insbesondere eines Wanddiagnosegeräts, aufgenommen. Die aufgenommenen Sensordaten bilden hierbei eine zu diagnostizierende Wand und gegebenenfalls in der Wand angeordnete Objekte ab.

Ferner wird eine Positionsbestimmung des Messgeräts relativ zur Wand ausgeführt und es werden positionsbehaftete Sensordaten durch ein Positionsermittlungssystem erzeugt. Die positionsbehafteten Sensordaten umfassen die Information der aufgenommenen Sensordaten und sind zusätzlich durch eine Positionsinformation erweitert, wobei die Positionsinformation eine Position des Messgeräts relativ zur Wand definiert, in der das Messgerät zum Zeitpunkt der Aufnahme der Sensordaten positioniert war.

Darauffolgend werden die positionsbehafteten Sensordaten gelabelt. Hierbei wird eine Groundtruth-Information berücksichtigt. Die Groundtruth-Information umfasst hierbei wenigstens eine Information bezüglich eines Vorhandenseins des Objekts in der Wand. Die Groundtruth-Information beschreibt somit das tatsächliche Vorhandensein eines Objekts in der Wand. Das Labeln der positionsbehafteten Sensordaten betrifft hierbei eine Kennzeichnung der Sensordaten in Bezug auf das jeweilige Vorhandensein bzw. die Position des Objekts.

Durch das Labeln sind die Sensordaten somit wenigstens dahingehend gekennzeichnet, dass das jeweilig gekennzeichnete Sensordatum ein in der Wand angeordnetes Objekt abbildet oder nicht. Die Positionsbestimmung des Messgeräts zum Zeitpunkt der Aufnahme der Sensordaten ermöglicht das Labeln der Sensordaten in Bezug auf das Vorhandensein des Objekts in der Wand.

Die Groundtruth-Information beschreibt, an welchen Stellen in der Wand das jeweilige Objekt positioniert ist. Für eine Zuordnung dieser Information zu den durch das Messgerät aufgenommenen Sensordaten ist eine Positionsinformation der Sensordaten benötigt, die eine Position definiert, in der das Messgerät zum Zeitpunkt der Aufnahme der Sensordaten positioniert war.

Durch die entsprechend gelabelten Sensordaten des Trainingsdatensatzes ist ein Training einer künstlichen Intelligenz des Messgeräts, insbesondere des Wanddiagnosegeräts möglich, in dem die künstliche Intelligenz darauf trainiert wird, basierend auf den Sensordaten des Messgeräts, ein in der Wand angeordnetes Objekt zu detektieren. Die Detektion umfasst hierbei das Erkennen, ob an einer Position an der Wand ein Objekt angeordnet ist oder nicht.

Nach einer Ausführungsform umfasst die Groundtruth-Information eine Klassifizierungsinformation bezüglich einer Objektposition und/oder eines Objekttyps des Objekts und/oder eine Objekttiefeninformation bezüglich einer Objekttiefe innerhalb der Wand und/oder eine Objektausdehnungsinformation bezüglich einer Objektausdehnung des Objekts umfasst.

Hierdurch kann der technische Vorteil erreicht werden, dass durch die Berücksichtigung der zusätzlichen Klassifikationsinformationen bezüglich der Objektposition, des Objekttyps, der Objekttiefeninformation und/oder der Objektausdehnung des Objekts zusätzliche Informationen in den Trainingsdatensatz integriert werden können. Diese zusätzlichen Informationen ermöglichen ein zusätzliches Training der künstlichen Intelligenz, die hierdurch insbesondere darauf trainiert werden kann, basierend auf den Sensordaten des Messgeräts, eine Objektposition, einen Objekttyp, eine Objekttiefe und/oder eine Objektausdehnung des detektierten Objekts zu bestimmen.

Die entsprechende Groundtruth-Information beschreibt in diesem Fall die tatsächliche Objektposition des Objekts in der Wand, den tatsächlichen Objekttyp des Objekts, die tatsächliche Objekttiefe des Objekts in der Wand bzw. die tatsächliche Objektausdehnung des Objekts.

Die genannten Groundtruth-Informationen können bei tatsächlicher Kenntnis des in der Wand angeordneten Objekts in den Trainingsdatensatz bzw. die aufgenommenen Sensordaten integriert werden.

Die Groundtruth-Information beschreibt im weitesten Sinne der Anmeldung den tatsächlich vorliegenden Zustand der zu untersuchenden Wand.

Nach einer Ausführungsform umfasst das Positionsermittlungssystem wenigstens einen Kamerasensor und wenigstens eine Positionsmarkierung, wobei die Positionsmarkierung an einer Oberfläche der Wand ausgebildet ist, wobei der Kamerasensor in einer vordefinierten Perspektivpositionierung zur Wand angeordnet ist, und wobei das Ausführen der Positionsbestimmung das Messgerät relativ zur Wand umfasst:

Aufnehmen von Kameradaten des Kamerasensors zeitlich während des Aufnehmens der Sensordaten der Sensoreinheit das Messgerät, wobei die Kameradaten das an der Wand positionierte Messgerät und die an der Wand angeordnete Positionsmarkierung abbilden;
Ermitteln einer Relativposition des Messgeräts relativ zur Positionsmarkierung basierend auf den Kameradaten; und
Ermitteln der Position des Messgeräts relativ zur Wand basierend auf der Relativposition.

Hierdurch kann der technische Vorteil erreicht werden, dass eine präzise Positionsbestimmung des Messgeräts relativ zur Wand ermittelbar ist. Hierzu werden zunächst Kameradaten eines Kamerasensors aufgenommen. Die Kameradaten bilden hierbei das Messgerät an der Wand angeordnet während der Aufnahme der Sensordaten ab. Ferner bilden die Kameradaten eine an der Wand ausgebildete Positionsmarkierung ab. Basierend auf den Kameradaten kann somit unter Berücksichtigung der Positionsmarkierung eine zeitaufgelöste Relativposition des Messgeräts relativ zur Positionsmarkierung ermittelt werden.

Hierauf basierend kann abschließend eine zeitaufgelöste Position des Messgeräts relativ zur Wand ermittelt werden. Die Vorgehensweise ermöglicht eine präzise Positionsbestimmung des Messgeräts relativ zur Wand. Durch die Zeitstempel der Kameradaten kann für eine Mehrzahl von Zeitpunkten während der Aufnahme des Sensordaten durch das Messgerät exakt die Position des Messgeräts relativ zur Wand bestimmt werden.

Verfahren nach einem der voranstehenden Ansprüche, wobei das Ausführen der Positionsbestimmung ferner umfasst:

Ausführen einer zeitlichen Synchronisierung zwischen der Aufnahme der Sensordaten der Sensoreinheit und der Aufnahme der Kameradaten des Kamerasensors; und
Ermitteln der Positionsinformation des Messgeräts relativ zur Wand für jedes Sensordatum des Sensoreinheit unter Berücksichtigung der zeitlichen Synchronisierung.

Hierdurch kann der technische Vorteil erreicht werden, dass eine präzise Erzeugung der positionsbehafteten Sensordaten ermöglicht ist. Durch Berücksichtigung der Zeitstempel der Kameradaten können für eine Mehrzahl von Zeitpunkten die jeweiligen Positionen des Messgeräts relativ zur Wand ermittelt werden. Durch die Zeitstempel der Sensordaten kann der Zeitpunkt ermittelt werden, in dem ein bestimmtes Sensordatum durch das Messgerät aufgenommen wurde. Durch die zeitliche Synchronisierung der Zeitstempel der Sensordaten und der Kameradaten kann für die aufgenommen Sensordaten die Position des Messgeräts relativ zur Wand zum Zeitpunkt der Aufnahme der Sensordaten ermittelt werden. Somit kann für jedes aufgenommene Sensordatum eine präzise Positionsinformation erstellt werden, die definiert, in welcher Position das Messgerät während der Aufnahme des jeweiligen Sensordatums positioniert war.

Nach einer Ausführungsform umfasst das Ermitteln der Position ferner:

Ermitteln einer Perspektive des Kamerasensors relativ zur Wand basierend auf der vordefinierten Perspektivposition, in der der Kamerasensor relativ zur Wand angeordnet ist;

Ausführen einer Perspektivenkorrektur auf die basierend auf den Kameradaten ermittelte Relativposition des Messgeräts relativ zur Positionsmarkierung zur Berücksichtigung der perspektivischen Position des Kamerasensors relativ zur Wand und Ermitteln der Position des Messgeräts an der Wand basierend auf der Perspektivenkorrektur.

Hierdurch kann der technische Vorteil erreicht werden, dass durch die Berücksichtigung der Perspektive des Kamerasensors relativ zur Wand eine Perspektivkorrektur der Kameradaten ausgeführt werden kann. Durch die Perspektivkorrektur können perspektivenbedingt Verfälschungen der Positionsbestimmung des Messgeräts relativ zur Wand basierend auf den Kameradaten bereinigt werden. Dies ermöglicht eine präzise Positionsbestimmung relativ zur Wand basierend auf den Kameradaten.

Nach einer Ausführungsform ist die Positionsmarkierung als eine ArUco-Markierung oder eine ChArUco-Markierung ausgebildet.

Hierdurch kann der technische Vorteil erreicht werden, dass durch die als ArUco-Markierung oder ChArUco-Markierung ausgebildete Positionsmarkierung eine präzise Bestimmung der Relativposition des Messgeräts relativ zur Positionsmarkierung basierend auf den Kameradaten ermöglicht ist. Die ArUco-Markierung oder ChArUco-Markierung kann ferner als ein entsprechend ausgebildetes Poster an der Wand angebracht werden, ohne dass hierdurch die Wand modifiziert werden muss.

Als ArUco-Markierung oder ChArUco-Markierung können die aus dem Stand der Technik bekannten ArUco-Markierungen oder ChArUco-Markierung verwendet werden.

Nach einer Ausführungsform ist die Positionsmarkierung durch eine an der Wand ausgebildete Markierung gebildet und umfasst: Tapetenmuster, Lichtschalter, Steckdose, Fenster, Möbel.

Hierdurch kann der technische Vorteil erreicht werden, dass bereits an der Wand ausgebildete Elemente als Positionsmarkierung verwendet werden können.

Hierdurch können auf extern auf die Wand aufzubringende Positionsmarkierungen verzichtet werden.

Nach einer Ausführungsform ist der Kamerasensor an einer Positionierungsvorrichtung angeordnet ist, und wobei über die Positionierungsvorrichtung der Kamerasensor in der vorbestimmten Perspektivposition relativ zur Wand positioniert ist.

Hierdurch kann der technische Vorteil erreicht werden, dass durch die Positionierung des Kamerasensors der Positionierungsvorrichtung der Kamerasensor präzise in einer vorbestimmten Perspektivposition zur Wand angeordnet werden kann. Indem die Perspektivposition bereits vordefiniert vorgegeben ist, können die notwendigen Perspektivkorrekturen der Kameradaten auf ein Minimum reduziert werden. Dies erleichtert die Positionsbestimmung des Messgeräts relativ zur Wand basierend auf den Kameradaten.

Nach einem Aspekt wird ein Trainingsdatensatz für ein Training einer künstlichen Intelligenz eines Messgeräts zur Wanddiagnostik bereitgestellt, wobei der Trainingsdatensatz durch das Verfahren zum Erzeugen eines Trainingsdatensatzes zum Trainieren einer künstlichen Intelligenz zum Betreiben eines Messgeräts nach einer der voranstehenden Ausführungsformen erzeugt wurde.

Nach einem Aspekt wird ein Computerimplementiertes Verfahren zum Trainieren einer künstlichen Intelligenz eines Messgeräts zur Wanddiagnostik bereitgestellt, umfassend:

Bereitstellen eines Trainingsdatensatzes durch Ausführen des Verfahrens zum Erzeugen eines Trainingsdatensatzes nach einer der voranstehenden Ausführungsformen;
Trainieren der künstlichen Intelligenz basierend auf dem Trainingsdatensatz zum Ausführen einer Objekterkennung eines in einer Wand ausgebildeten Objekts, wobei die Objekterkennung wenigstens eine Objektdetektion und eine Objektklassifikation umfasst.

Nach einem Aspekt wird eine Recheneinheit bereitgestellt, die eingerichtet ist, das Verfahren zum Erzeugen eines Trainingsdatensatzes zum Trainieren einer künstlichen Intelligenz zum Betreiben eines Messgeräts nach einer der voranstehenden Ausführungsformen und/oder das Verfahren zum Trainieren einer künstlichen Intelligenz eines Messgeräts auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Erzeugen eines Trainingsdatensatzes zum Trainieren einer künstlichen Intelligenz zum Betreiben eines Messgeräts nach einer der voranstehenden Ausführungsformen und/oder das Verfahren zum Trainieren einer künstlichen Intelligenz eines Messgeräts auszuführen.

Ausführungsformen der Erfindung sind mit Bezug auf die folgenden Figuren beschrieben. Die Figuren zeigen:

Fig. 1      eine schematische Darstellung eines Messgeräts gemäß einer Ausführungsform;

Fig. 2      eine weitere schematische Darstellung des Messgeräts gemäß einer weiteren Ausführungsform;

Fig. 3    eine weitere schematische Darstellung des Messgeräts gemäß einer weiteren Ausführungsform;

Fig. 4    eine schematische Darstellung einer Messung des Messgeräts gemäß einer Ausführungsform,

Fig. 5    eine weitere schematische Darstellung des Messgeräts gemäß einer weiteren Ausführungsform;

Fig. 6    eine schematische Darstellung des Systems zum Erzeugen eines Trainingsdatensatzes gemäß einer weiteren Ausführungsform;

Fig. 7    eine schematische Darstellung von durch das Messgerät aufgenommenen Daten;

Fig. 8    eine weitere schematische Darstellung des Systems zum Erzeugen eines Trainingsdatensatzes gemäß einer weiteren Ausführungsform;

Fig. 9    ein Flussdiagramm eines Verfahrens zum Erzeugen eines Trainingsdatensatzes gemäß einer Ausführungsform,

Fig. 10   ein Flussdiagramm eines Verfahrens zum Trainieren einer künstlichen Intelligenz eines Messgeräts gemäß einer weiteren Ausführungsform, und

Fig. 11   eine schematische Darstellung eines Computerprogrammprodukts.

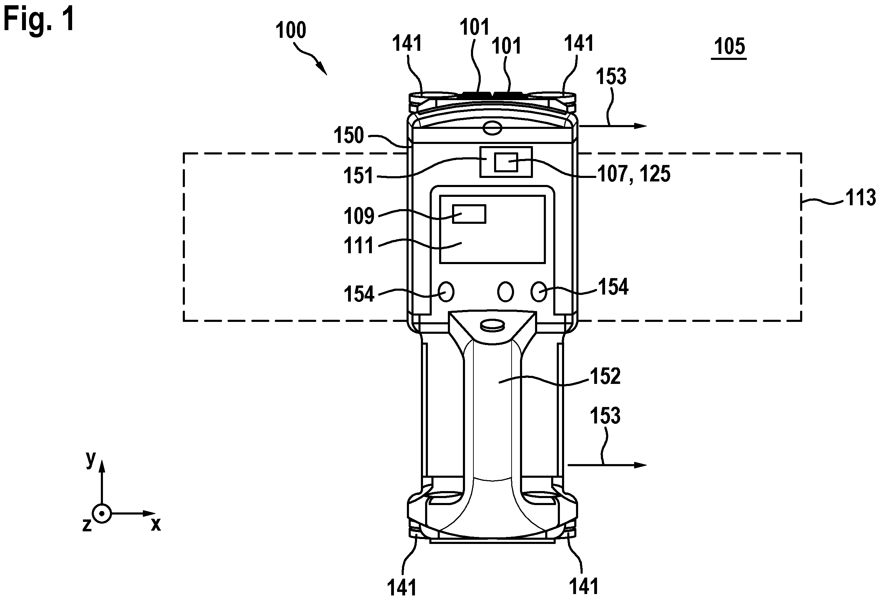

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

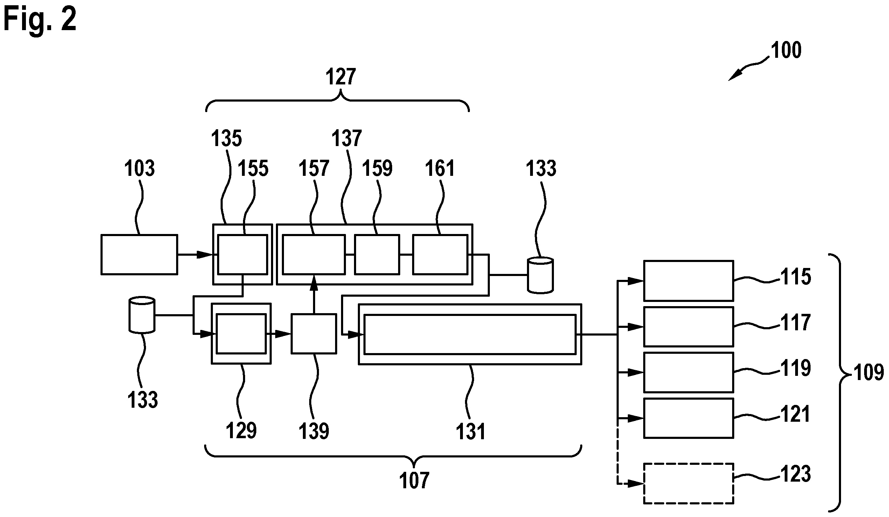

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 133 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

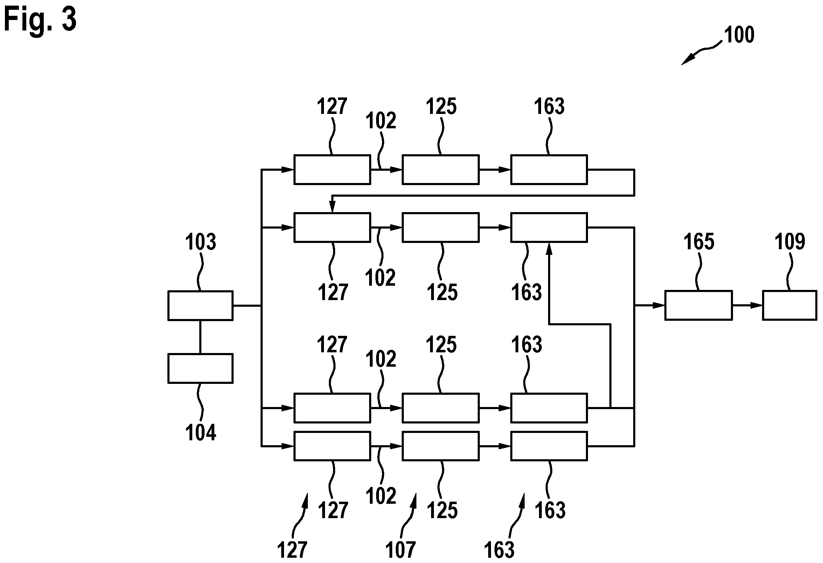

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

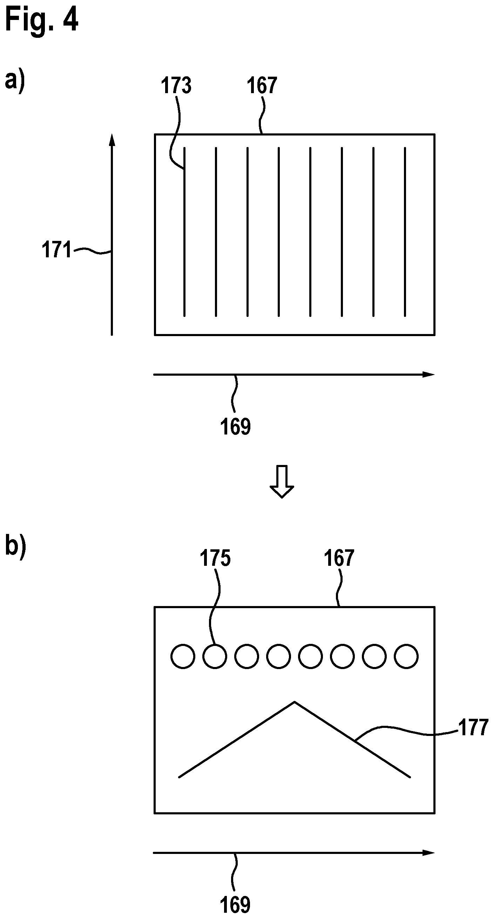

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Figur 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Figur 2 die jeweils vorverarbeiteten Sensordaten, sprich Radardaten 103 und zusätzliche Sensorinformationen 104 der zusätzlichen Sensoren, umfassen. Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions-und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

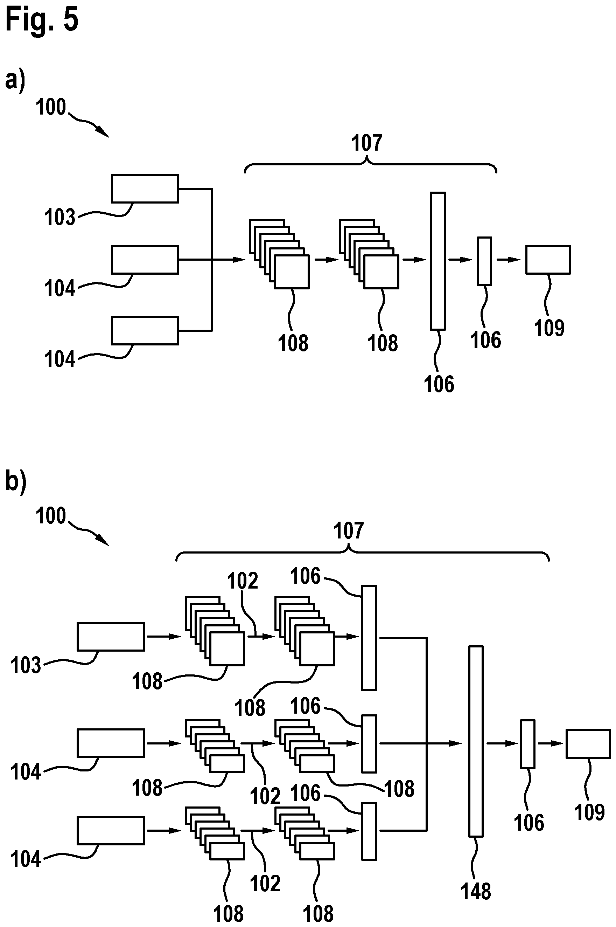

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

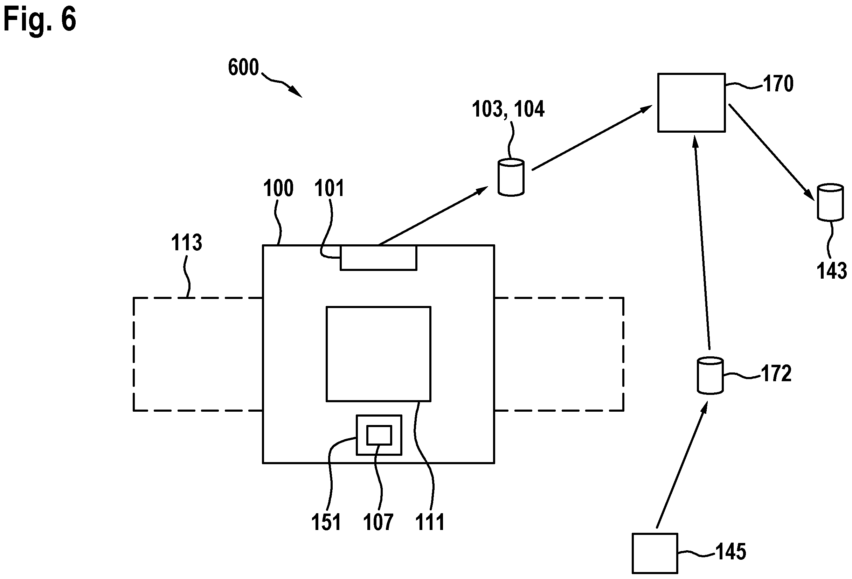

Fig. 6 zeigt eine schematische Darstellung des Systems 600 zum Erzeugen eines Trainingsdatensatzes gemäß einer Ausführungsform.

Erfindungsgemäß werden zum Erzeugen von einem Trainingsdatensatz 143 zunächst Sensordaten 103, 104 wenigstens einer Sensoreinheit 101 des Messgeräts 100 aufgenommen. Hierzu können mehrere Messungen durch ein Messgerät 100 bzw. durch eine Vielzahl von Messgeräten 100 einer Wand 105 oder einer Mehrzahl verschiedener Wände 105 ausgeführt werden. Während der Messungen 105 können die Messgerät 100, wie oben beschrieben, entlang der Bewegungsrichtung 153 an den zu untersuchenden Wänden 105 entlang bewegt werden und entsprechende Sensordaten 103, 104 aufgenommen werden, die die zu untersuchenden Wände 105 und gegebenenfalls darin angeordnete Objekt 113 umfassen. Die Sensordaten 103, 104 können Radardaten 103 und/oder zusätzliche Sensorinformationen 104 umfassen-

Während der Aufnahme dieser Sensordaten 103, 104 durch die Messgeräte 100 wird für jedes Messgerät 100 Positionsinformationen 172 durch ein Positionsermittlungssystem 145 ermittelt. Die Positionsinformationen 172 beschreiben hierbei die Positionen des Messgeräts 100 relativ zur Wand 105, in denen das Messgerät 100 während der Aufnahme der Sensordaten 103, 104 positioniert war.

Die Positionsinformationen 172 können darauffolgend in die Sensordaten 103, 104 integriert werden, um hierüber positionsbehaftete Sensordaten zu generieren.

Basierend auf den Positionsinformationen 172, die für jedes Sensordatum 103, 104 die Position des Messgeräts 100 relativ zur Wand 105 zum Zeitpunkt der Aufnahme des jeweiligen Sensordatums 103, 104 definieren, kann ein Labeln der Sensordaten 103, 104 erfolgen. Beim Labeln der Sensordaten 103, 104 wird jedes Sensordatum 103, 104 mit einer Groundtruth-Information versehen. Die Groundtruth-Information betrifft wenigstens eine Information, die besagt, ob durch das jeweilige Sensordatum 103, 104 das in der Wand 105 angeordnete Objekt 113 abgebildet ist.

Diese Groundtruth-Information hängt zum einen davon ab, ob in der untersuchten Wand, die durch das jeweilige Sensordatum abgebildet ist, ein Objekt 113 angeordnet ist. Ferner hängt die Groundtruth-Information davon ab, ob das in der Wand 105 angeordnete Objekt 113 in einer Objektposition 115 angeordnet ist, die mit der Position des Messgeräts 100 relativ zur Wand 105 zum Zeitpunkt der Aufnahme des jeweiligen Sensordatums 103, 104 wenigstens teilweise übereinstimmt.

Zusätzlich kann die Groundtruth-Information ferner Informationen bezüglich einer tatsächlichen Objektposition 115 des Objekts 113 und/oder bezüglich eines Objekttyps 117 des Objekts 113 und/oder bezüglich einer Objekttiefe 119 des Objekts 113 und/oder bezüglich einer Objektausdehnung 121 des Objekts 113 umfassen. Ferner kann die Groundtruth-Information Informationen bezüglich eines Wandtyps 123 der untersuchten Wand 105 umfassen.

Durch das Labeln der Sensordaten 103, 104 bezüglich der Groundtruth-Information ist jedes Datum mit Bezug auf die Groundtruth-Information gekennzeichnet, wodurch wenigstens charakterisiert ist, ob durch das jeweilige Sensordatum 103, 104 ein in der Wand 105 angeordnetes Objekt 113 abgebildet ist.

Das Labeln des Sensordaten 103, 104 entspricht hierbei einer Kennzeichnung des Sensordaten 103, 104 bezüglich der entsprechenden Groundtruth-Information.

Durch die Positionsinformation 172 des Positionsermittlungssystems 145 kann für jedes Sensordatum 103, 104 klar definiert werden, an welcher Position das Messgerät 100 relativ zur Wand 105 zum Zeitpunkt der Aufnahme des jeweiligen Sensordatums 103, 104 positioniert war. Dies ermöglicht unter Kenntnis der tatsächlichen Objektpositionen 115 der in der Wand 105 angeordneten Objekte 113 da klare eindeutige Labeln der Sensordaten 103, 104 in Bezug auf die Objektposition 115, sprich in Bezug darauf, ob durch das jeweilige Sensordatum 103, 104 tatsächlich ein in der Wand angeordnetes Objekt 113 abgebildet ist.

Die derart gelabelten Sensordaten 103, 104 werden darauffolgend in einem entsprechenden Trainingsdatensatz 143 zusammengefasst.

Das Labeln der Sensordaten 103, 104 wie auch die Berücksichtigung der Positionsinformation 172 und das Erzeugen des Trainingsdatensatzes 143 kann durch eine externe Recheneinheit 170 ausgeführt werden.

Das Positionsermittlungssystem 145 kann beispielsweise einen Positionssensor umfassen, der am Messgerät 100 angeordnet ist. Über den Positionssensor kann somit eine Positionierung des Messgeräts 100 relativ zur Wand ermittelt werden.

Vorzugsweise umfasst das Positionsermittlungssystem 145 einen Kamerasensor, der extern zum Messgerät 100 positioniert ist. Über den Kamerasensor können Kameradaten aufgenommen werden, die das Messgerät 100 während des Aufnehmens der Sensordaten 103, 104 abbilden. Über die Kameradaten kann somit eine Positionierung des Messgeräts 100 relativ zur Wand 105 während der Aufnahme der Sensordaten 103, 104 ermittelt werden.

Über die Zeitstempel der Kameradaten kann die Position des Messgeräts 100 relativ zur Wand 105 zeitaufgelöst ermittelt werden. Es kann somit für mehrere Zeitpunkte die jeweiligen Positionen des Messgeräts 100 relativ zur Wand 105 ermittelt werden. Durch die Zeitstempel der Sensordaten 103, 104 können die Zeitpunkte ermittelt werden, in denen die jeweiligen Sensordaten 103, 104 durch das Messgerät 100 aufgenommen wurden.

Zur Ermittlung der Positionsinformation 172 kann ferner eine zeitliche Synchronisierung der Kameradaten des Kamerasensors und der Sensordaten 103 104 des Messgeräts 100 durchgeführt werden. Durch die zeitliche Synchronisation der jeweiligen Zeitstempel der Sensordaten 103, 104 und der der Kameradaten kann erreicht werden, dass jedem Sensordatum 103, 104 die korrekte Positionsinformation 172 zugeordnet werden kann.

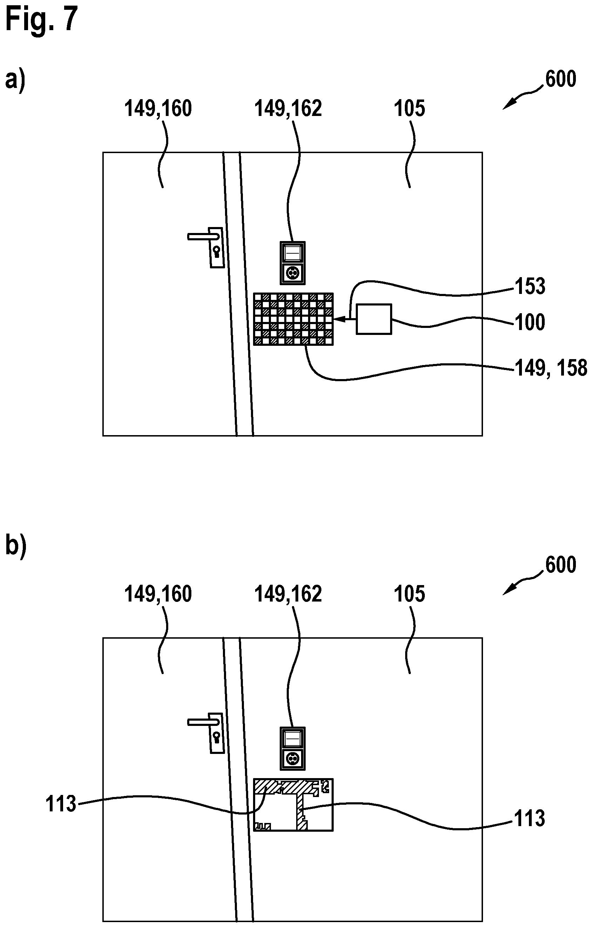

Fig. 7 zeigt eine weitere schematische Darstellung des Systems 600 zum Erzeugen eines Trainingsdatensatzes gemäß einer weiteren Ausführungsform.

In den Graphiken a), b) sind beispielhaft zwei Kameradaten, sprich zwei Bilder bzw. zwei Frames, des Kamerasensors 147 des Positionsermittlungssystems 145 dargestellt. Die in den Graphiken a), b) gezeigten Bilder stellen eine Wand 105 dar. An der Wand 105 ist eine Positionsmarkierung 148 in Gestalt eines ArUco/ChArUco Posters 158 angeordnet. Ferner ist an der Wand ein Lichtschalter 162 positioniert, der ebenfalls als Positionsmarkierung 148 definiert ist. Neben der Wand 105 ist eine Tür 160 angeordnet, die wiederum als Positionsmarkierung 148 definiert ist.

In Graphik a) ist darüber hinaus ein Messgerät 100 im Sinne der vorliegenden Erfindung angeordnet. Das Messgerät 100 kann zur Aufnahme entsprechender Sensordaten 103, 104 entlang der Bewegungsrichtung 153 bewegt werden, um somit eine Wanddiagnose des während der Bewegung des Messgeräts 100 durch dieses überfahrenen Raumbereichs der Wand 105 durchzuführen.

Gemäß einer Ausführungsform kann die Positionsinformation 172, sprich die Positionsbestimmung des Messgeräts 100 während der Aufnahme der Sensordaten relativ zur Wand 105 über die Verwendung der in Graphik a) dargestellten Positionsmarkierungen 148 erfolgen. Hierbei kann durch die Detektion der Positionsmarkierung 148 und des Messgeräts 100 in den Kameradaten eine Relativposition des Messgeräts 100 zur Positionsmarkierung 148 ermittelt werden. Über die derart ermittelte Relativposition zwischen dem Messgerät 100 und der Positionsmarkierung 148 ist eine Positionsbestimmung des Messgeräts 100 relativ zur Wand 105 ermöglicht. Hierauf basierend kann entsprechend die Positionsinformation 172 erstellt werden.

In Graphik b) ist ferner im Bereich der in Graphik a) positionierten Positionsmarkierung 148 in Form des ArUco/ChArUco-Posters 158 eine Groundtruth-Information bezüglich eines in der Wand angeordneten Objekts 113 graphisch dargestellt. Die Groundtruth-Information umfasst hierbei wenigstens die Positionierung des Objekts 113 in der Wand 105.

In Grafik b) ist als Objekt 113 eine Leitung angedeutet. Hierdurch soll angedeutet werden, dass die entsprechende Information, sprich die Objektposition 115, der Objekttyp 117, und andere Informationen bezüglich des Objekts 113 als Groundtruth-Information bekannt sind.

Über die dargestellte Groundtruth-Information kann eine entsprechende Labelung der durch das Messgerät 100 im Bereich des in der Graphik a) dargestellten ArUCo/ChArUco-Posters 158 aufgenommenen Sensordaten 103, 104 kann ein entsprechender Trainingsdatensatz generiert werden.

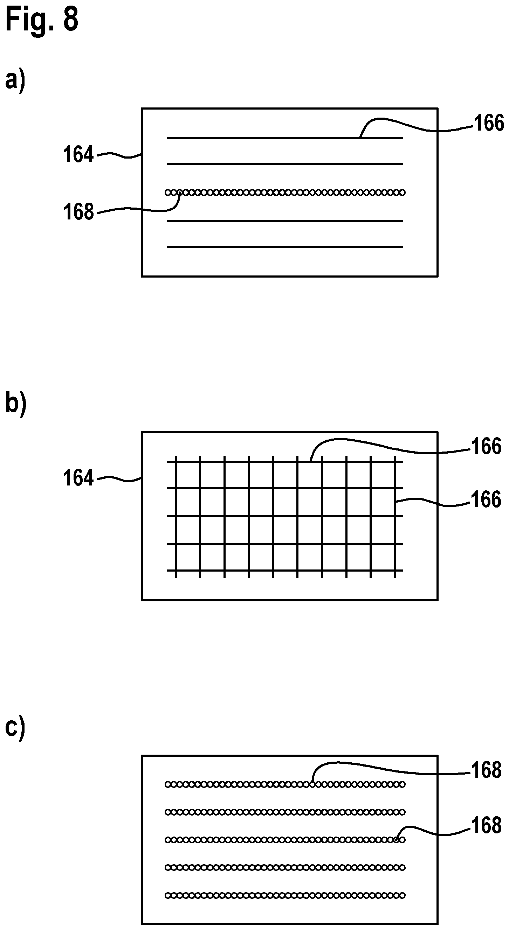

Fig. 8 zeigt eine schematische Darstellung von durch das Messgerät 100 aufgenommenen Daten.

Die Graphiken a), b), c) zeigen verschiedene Messflächen 164, die Raumbereiche definieren, in denen durch Verfahren des Messgeräts 100 relativ zur Wand 105 Sensordaten 103, 104 aufgenommen wurden. Die Messflächen 164 können hierbei beispielsweise die Fläche des ArUco/ChArUco-Posters 158 beschreiben.

Innerhalb der Messfläche 164 wird zur Aufnahme der Sensordaten 103, 104 das Messgerät 100 in mehreren Messbahnen 166 verfahren. Entlang der Messbahnen 166 werden an verschiedenen Messpunkten 168 jeweils Sensordaten 103, 104 aufgenommen.

Die Messbahnen 166 können größtenteils parallel zueinander angeordnet sein, wie die in Graphik a) dargestellt ist. Die Messbahnen können darüber hinaus in kreuzender Anordnung angeordnet sein, wie dies in Graphik b) dargestellt ist.

Die Positionsinformation 127 kann mit den entlang der Messbahn 166 in den Messpunkten 168 aufgenommenen Sensordaten 103, 104 derart integriert werden, das den jeweiligen Sensordaten 103, 104 an jedem Messpunkt 168 der verschiedenen Messbahnen 166 jeweils die Position des Messgeräts 100 zur Aufnahme des jeweiligen Messdatums 103, 104 bestimmt wird. Bei der sich kreuzenden Messbahnen 166 kann die bereits ermittelte Positionsinformation 162 wiederverwendet werden. Darüber hinaus kann bei eng beieinanderliegenden Messpunkten 168 auf die entsprechende Positionsinformation basierend auf den Positionsformationen der nah angeordneten Messpunkte 168 geschlossen werden.

Durch eine derartige feinmaschige Abrasterung der Messfläche 164 in den gezeigten Messbahnen 166 kann zusätzlich auf Grund der engen Beabstandung der Messpunkte 168 zueinander eine Hintergrundkorrektur basierend auf den Sensordaten 103, 104 generiert werden. Die Hintergrundkorrektur berücksichtigt hierbei die Messsignale, die ausschließlich von der Wand 105 reflektiert werden und keinen Einfluss eines in der Wand 105 angeordneten Objekts aufweisen. Hierüber kann eine Objektbestimmung erfolgen, in dem die Veränderung der aufgenommenen Sensordaten 103, 104 der verschiedenen Messpunkte 168 ermittelt wird.

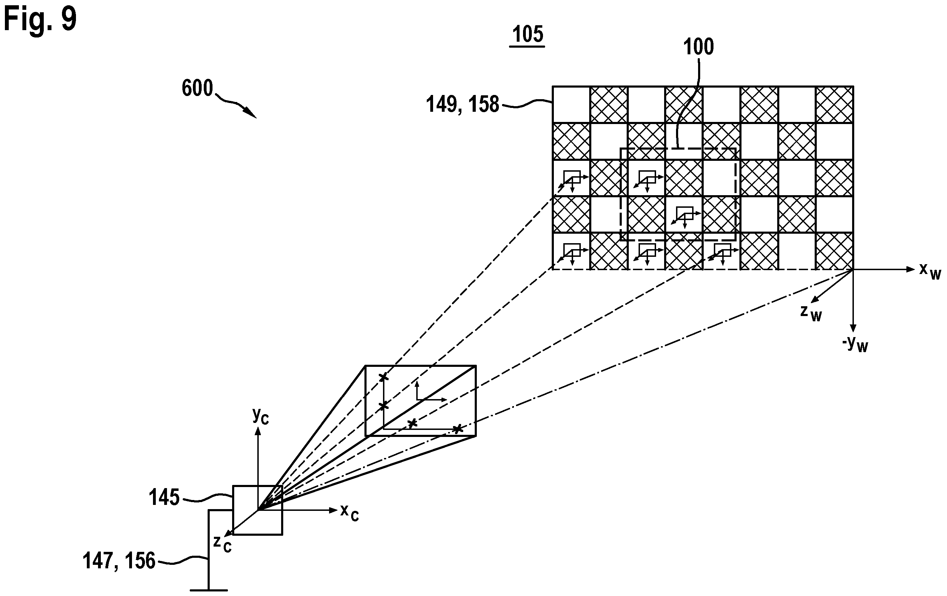

Fig. 9 zeigt eine weitere schematische Darstellung des Systems 700 zum Erzeugen eines Trainingsdatensatzes 143 gemäß einer weiteren Ausführungsform.

In der gezeigten Ausführungsform umfasst das Positionsermittlungssystem 145 einen Kamerasensor 147. Der Kamerasensor 147 ist an einer Positionsvorrichtung 156 angeordnet. Die Positionsvorrichtung 156 und insbesondere der Kamerasensor 147 sind in einer Entfernung zur Wand 105 angeordnet. An der Wand 105 ist eine Positionsmarkierung 149 in Form eines ArUco/Ch ArUco-Posters 158 angeordnet. Ferner ist in Figur 9 an der Wand 105 im Bereich des ArUco/ChArUco -Posters 158 ein Messgerät 100 dargestellt.

In der Figur 9 ist dargestellt, dass auf Grund der Entfernung der des Kamerasensors 147 zur Wand 105 eine Perspektivenkorrektur der durch den Kamerasensor 147 aufgenommenen Kameradaten zur Bestimmung der Position des Messgeräts 100 relativ zur Wand 105 erfolgen muss.

Eine Perspektivenkorrektur kann durch die unten dargestellten mathematischen Beziehungen ausgeführt werden.

$$\begin{bmatrix} u \\ v \\ 1 \end{bmatrix} = \mathbf{E}\,\mathbf{K}\,\mathbf{T}_w^c \begin{bmatrix} X_w \\ Y_w \\ Z_w \\ 1 \end{bmatrix}$$

Hierbei ist E die Einheitsmatrix, K die Kameramatrix, wobei die Kameramatrix die intrinsischen Kameradaten des Kamerasensors 147 umfasst, und T ist der Transformationsvektor, der die Transformation eines Welt-Koordinatensystems zu einem Kamerakoordinatensystem des Kamerasensors 147 beschreibt. Die Einträge u und v stellen Pixelelemente in der Bildebene dar. Die Komponenten Xw, Yw, Zw stellen hierbei die Weltkoordinaten eines Weltkoordinatensystems dar. Die Komponenten Xc, Yc, Zc stellen die Koordinaten des in Fig. 9 gezeigten Kamerakoordinatensystems des Kamerasensors 147 dar.

Unter Berücksichtigung der Matrix-Notation entsteht folgende Gleichung:

$$\begin{bmatrix} u \\ v \\ 1 \end{bmatrix} = \begin{bmatrix} 1 & 0 & 0 & 0 \\ 0 & 1 & 0 & 0 \\ 0 & 0 & 1 & 0 \end{bmatrix} \begin{bmatrix} f_x & 0 & c_x \\ 0 & f_x & c_y \\ 0 & 0 & 1 \end{bmatrix} \begin{bmatrix} r_{11} & r_{12} & r_{13} & t_x \\ r_{21} & r_{22} & r_{23} & t_y \\ r_{31} & r_{32} & r_{33} & t_z \\ 0 & 0 & 0 & 1 \end{bmatrix} \begin{bmatrix} X_w \\ Y_w \\ Z_w \\ 1 \end{bmatrix}$$

Hierbei stellen f eine Fokuslänge des Kamerasensors 147, r Elemente einer Rotationsmatrix R und t Elemente eines Translationsvektors dar. Nachträglich kann eine Transformationsrechnung vorgenommen werden, um eine tatsächliche Position des Kamerasensors 147 im Weltkoordinatensystem zu erhalten. Das Weltkoordinatensystem ist hierbei durch das ArUco/ChArUco-Poster 158 repräsentiert. Um Vektoren aus dem Kamerasystem

in das Weltsystem umzurechnen wird folgende Transformationsbeziehung benötigt:

$$\mathbf{T}_c^w = \begin{bmatrix} R & t \\ 0 & 1 \end{bmatrix}^{-1} = \begin{bmatrix} R^{-1} & -R^{-1}t \\ 0 & 1 \end{bmatrix}$$

Hierbei ist R die Rotationsmatrix. Dieser Zusammenhang ermöglicht das Extrahieren der realen Welt-Positions-und Lageinformationen des Kamerasensors 147 in Referenz zu einem Aruco/ChArUco-Poster 158 aus den Kameradaten. Hierzu kann das gesamte Video oder nur einzelnen Frames der Kameradaten verwendet werden. Weiterführend kann durch eine weitere vektorbasierende Transformationsbeziehung auf die Position und Lage des durch die
Kameradaten abgebildeten Messgeräts 100 umgerechnet werden. Es entsteht eine bildbasierte Vektorbeziehung die durch Projektion in 3D gelöst werden soll. Dazu müssen Positionen sprich Punkte aus den Kameradaten in Positionen mit Bezug auf das Weltkoordinatensystem umgerechnet werden, aus welchen anschließend der benötigte Vektor berechnet wird. Dies geschieht durch

$$\begin{bmatrix} X_W \\ Y_W \\ Z_W \end{bmatrix} = R^{-1}\left(K^{-1}\begin{bmatrix} u \\ v \\ 1 \end{bmatrix} - \vec{t}\,\right)$$

Letztendlich erhält man den Vektor x, der die Transformation von projizierten Positionen des Messgeräts 100 in den Kameradaten zu tatsächlichen Positionen des Messgeräts 100 im Raum, sprich relativ zur Wand 105, beschreibt. Dieser Zusammenhang ist grafisch in Fig. 9 dargestellt.

$$\vec{x}_{DC_w} = \begin{bmatrix} X_{D_w} \\ Y_{D_w} \\ Z_{D_w} \end{bmatrix} - \begin{bmatrix} X_{C_w} \\ Y_{C_w} \\ Z_{C_w} \end{bmatrix}$$

Hierbei sind Cw Kamerakoordinaten des Kamerasensors 147 im Weltkoordinatensystem, Dw Gerätekoordinaten des Messgeräts 100 im Weltkoordinatensystem, wobei die gezeigte Relation eine Umwandlung der Kamerakoordinaten in die Gerätekoordinaten des Messgeräts 100 darstellt. Eine Genauigkeit der Bestimmung der Position des Mesgeräts 100 relativ zur Wand 105 kann bei dieser Vorgehensweise empfindlich von der Qualität einer Kalibrierung des Kamerasensors 147 und einer eindeutigen Erkennung der Positionsmarkierung abhängen. Es kann daher vorteilhaft sein, den Kamerasensor 147 vor der Durchführung des Verfahrens zu kalibrieren und ausreichend Testaufnahmen durchzuführen, um sicherzustellen, dass die Erkennung der Positionsmarkierung zuverlässig ist.

Durch Ausführen des oben beschriebenen Verfahrens kann die Position des Messgeräts 100 relativ zur Wand 105 zu jedem Zeitpunkt bestimmt werden. Dies kann genutzt werden, um die während der Messungen durch das Messgerät aufgenommen Sensordaten 103, 104 diesen Positionen des Messgeräts 100 relativ zur Wand 105 zuzuordnen. Insbesondere können mehrere Messungen zu einer Messsequenz zusammengestellt werden und diese gemeinsam vorteilhaft Verarbeitet werden.

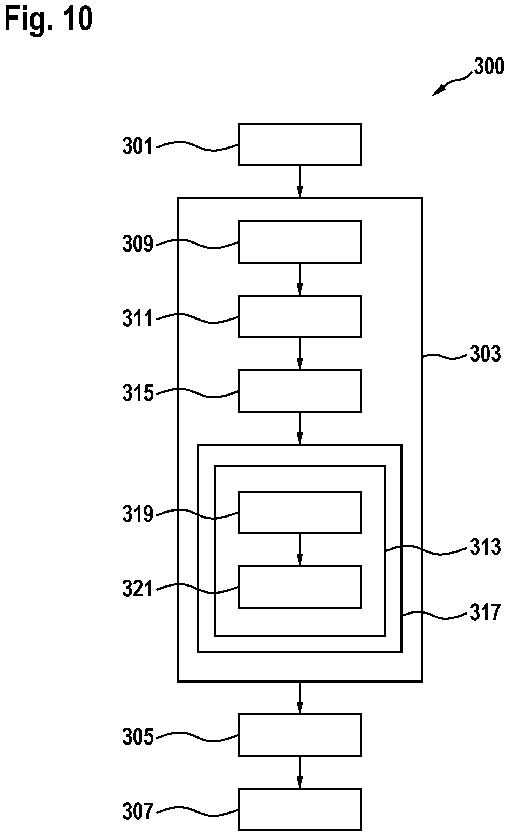

Fig. 10 zeigt ein Flussdiagramm eines Verfahrens 300 zum Erzeugen eines Trainingsdatensatzes 143 gemäß einer Ausführungsform.

Zum Erzeugen eines Trainingsdatensatzes 143 zum Trainieren einer künstlichen Intelligenz 125 zum Betreiben eines Messgeräts 100, insbesondere eines Wanddiagnosegeräts, werden in einem ersten Verfahrensschritt 301 zunächst Sensordaten 103, 104 wenigstens einer Sensoreinheit 101 des Messgeräts 100 aufgenommen. Die Sensordaten 103, 104 bilden hierbei eine zu diagnostizierende Wand 105 ab.

In einem weiteren Verfahrensschritt 303 wird eine Positionsbestimmung des Messgeräts 100 relativ zur Wand 105 ausgeführt und es werden positionsbehaftete Sensordaten 103, 104 durch ein Positionsermittlungssystem 145 erzeugt. In der Positionsbestimmung wird jedem aufgenommenen Sensordatum 103, 104 eine Positionsinformation 172 zugeordnet. Die Positionsinformation 172 eine Position des Messgeräts 100 relativ zur Wand 105 definiert, in der das Messgerät 100 zu einem Zeitpunkt des jeweiligen Sensordatums 103, 104 relativ zur Wand 105 positioniert war.

Gemäß einer Ausführungsform umfasst das Positionsermittlungssystem 145 wenigstens einen Kamerasensor 147 und wenigstens eine Positionsmarkierung 149. Die Positionsmarkierung 149 ist an einer Oberfläche der Wand 105 ausgebildet und der Kamerasensor 147 in einer vordefinierten Perspektivpositionierung zur Wand 105 angeordnet.

Hierbei werden somit zunächst in einem Verfahrensschritt 309 Kameradaten des Kamerasensors 147 zeitlich während des Aufnehmens der Sensordaten 103, 104 durch das Messgerät 100 aufgenommen, wobei die Kameradaten des an der Wand 105 positionierte Messgerät 100 und die an der Wand 105 angeordnete Positionsmarkierung 149 abbilden.

In einem Verfahrensschritt 311 wird basierend auf den Kameradaten eine Relativposition des Messgeräts relativ zur Positionsmarkierung 149 ermittelt.

In einem Verfahrensschritt 315 wird darauffolgend eine zeitliche Synchronisierung zwischen den aufgenommenen Sensordaten 103, 104 des Messgeräts 100 und den aufgenommenen Kameradaten des Kamerasensors 147 ausgeführt.

Hierauf folgend wird in einem Verfahrensschritt 317 eine Positionsinformation 172, in der die Position des Messgeräts 100 relativ zur Wand 105 zum Zeitpunkt der Aufnahme eines Sensordatums 103, 104 definiert ist, für jedes Sensordatum unter Berücksichtigung der zeitlichen Synchronisierung ermittelt.

Hierauf folgend wird in einem Verfahrensschritt 313 eine Position des Messgeräts 100 relativ zur Wand 105 ermittelt.

Hierzu wird einem Verfahrensschritt 319 eine Perspektive des Kamerasensors 107 relativ zur Wand 105 basierend auf der vordefinierten Perspektivposition des Kamerasensors 147 relativ zur Wand 105 ermittelt.

Darauffolgend wird in einem Verfahrensschritt 321 eine Perspektivkorrektur, auf die basierend auf den Kameradaten ermittelte Relativposition des Messgeräts 100 relativ zur Positionsmarkierung 149 zur Berücksichtigung der perspektiven Position des Kamerasensors 147 relativ zur Wand 105 ausgeführt.

In einem weiteren Verfahrensschritt 305 werden darauffolgend die positionsbehafteten Sensordaten 103 unter Berücksichtigung einer Groundtruth-Information gelabelt und gelabelte Sensordaten 103, 104 generiert. Die Groundtruth-Information umfasst hierbei wenigstens eine Information bezüglich eines Vorhandenseins wenigstens eines Objekts 113 in der Wand 105.

In einem weiteren Verfahrensschritt 307 werden die gelabelten Sensordaten 103, 104 zur einem Trainingsdatensatz 143 zusammengefasst.

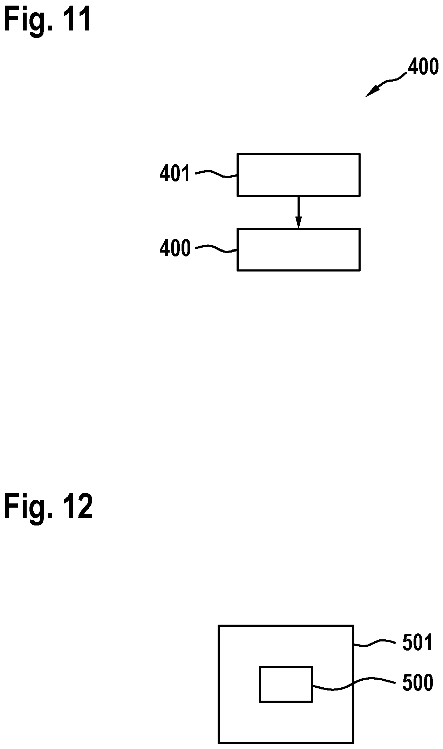

Fig. 11 zeigt ein weiteres Flussdiagramm des Verfahrens 300 zum Erzeugen eines Trainingsdatensatzes 143 gemäß einer weiteren Ausführungsform.

Zum Trainieren einer künstlichen Intelligenz 125 eines Messgeräts 100 zur Wanddiagnose wird in einem Verfahrensschritt 401 zunächst ein Trainingsdatensatz 143 durch Ausführen des Verfahrens 300 zum Erzeugen eines Trainingsdatensatzes 143 nach den oben beschriebenen Ausführungsformen bereitgestellt.

In einem weiteren Verfahrensschritt 403 wird die künstliche Intelligenz 125 basierend auf dem Trainingsdatensatz 143 zum Ausführen einer Objekterkennung eines in einer Wand 105 ausgebildeten Objekts 113 trainiert, wobei die Objekterkennung wenigstens eine Objektdetektion umfasst.

Fig. 12 zeigt eine schematische Darstellung eines Computerprogrammprodukts 500, umfassend Befehle, die bei der Ausführung des Programms durch eine Datenverarbeitungseinheit diese veranlassen, das Verfahren 300 zum Erzeugen eines Trainingsdatensatzes 143 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.


**Patentansprüche**

1. Computerimplementiertes Verfahren (300) zum Erzeugen eines Trainingsdatensatzes (143) zum Trainieren einer künstlichen Intelligenz (125) zum Betreiben eines Messgeräts (100), insbesondere eines Wanddiagnosegeräts, umfassend:

   Aufnehmen (301) von Sensordaten (103) wenigstens einer Sensoreinheit (101) eines Messgeräts (100), wobei die Sensordaten (103) eine zu diagnostizierende Wand (105) abbilden;
   Ausführen (303) einer Positionsbestimmung des Messgeräts (100) relativ zur Wand (105) und Erzeugen von positionsbehafteten Sensordaten (103) durch ein Positionsermittlungssystem (145), wobei in der Positionsbestimmung einem jedem aufgenommenem Sensordatum (103) eine Positionsinformation (172) zugeordnet wird, und wobei die Positionsinformation (172) eine Position des Messgeräts (100) relativ zur Wand (105) definiert, in der das Messgerät (100) zu einem Zeitpunkt der Aufnahme des Sensordatums (103) relativ zur Wand (105) positioniert war; Labeln (305) der positionsbehafteten Sensordaten (103) unter Berücksichtigung einer Groundtruth-Information und Generieren von gelabelten Sensordaten (103), wobei die Groundtruth-Information wenigstens eine Information bezüglich eines Vorhandenseins wenigstens eines Objekts (113) in der Wand (105) umfasst; und
   Zusammenfassen (307) der gelabelten Sensordaten (103) zu einem Trainingsdatensatz (143).

2. Verfahren (300) Nach Anspruch 1, wobei die Groundtruth-Information eine Klassifizierungsinformation bezüglich einer Objektposition (115) des Objekts (113) und/oder eines Objekttyps (117) des Objekts (113) und/oder eine Objekttiefeninformation bezüglich einer Objekttiefe (119) innerhalb der Wand (105) und/oder eine Objektausdehnungsinformation bezüglich einer Objektausdehnung (121) des Objekts (113) umfasst.

3. Verfahren (300) nach einem der voranstehenden Ansprüche, wobei das Positionsermittlungssystem (145) wenigstens einen Kamerasensor (147) und wenigstens einen Positionsmarkierung (149) umfasst, wobei die Positionsmarkierung (149) an einer Oberfläche der Wand (105) ausgebildet ist, wobei der Kamerasensor (147) in einer vordefinierten Perspektivpositionierung zur Wand (105) angeordnet ist, und wobei das Ausführen (303) der Positionsbestimmung das Messgerät (100) relativ zur Wand (105) umfasst:

   Aufnehmen (309) von Kameradaten des Kamerasensors (147) zeitlich während des Aufnehmens der Sensordaten (103) der Sensoreinheit (101) das Messgerät (100), wobei die Kameradaten das an der Wand (105) positionierte Messgerät (100) und die an der Wand (105) angeordnete Positionsmarkierung (149) abbilden;
   Ermitteln (311) einer Relativposition des Messgeräts (100) relativ zur Positionsmarkierung (149) basierend auf den Kameradaten; und
   Ermitteln (313) der Position des Messgeräts (100) relativ zur Wand (105) basierend auf der Relativposition.

4. Verfahren (300) nach einem der voranstehenden Ansprüche, wobei das Ausführen (303) der Positionsbestimmung ferner umfasst:

   Ausführen (315) einer zeitlichen Synchronisierung zwischen der Aufnahme der Sensordaten (103) der Sensoreinheit (101) und der Aufnahme der Kameradaten des Kamerasensors (147); und
Ermitteln (317) der Positionsinformation (172) des Messgeräts (100) relativ zur Wand (105) für jedes Sensordatum (103) des Sensoreinheit (101) unter Berücksichtigung der zeitlichen Synchronisierung.

5. Verfahren (300) nach einem der voranstehenden Ansprüche, wobei das Ermitteln (313) der Position ferner umfassend:

Ermitteln (319) einer Perspektive des Kamerasensors (147) relativ zur Wand (105) basierend auf der vordefinierten Perspektivposition, in der der Kamerasensor (147) relativ zur Wand (105) angeordnet ist;
Ausführen (321) einer Perspektivenkorrektur auf die basierend auf den Kameradaten (147) ermittelte Relativposition des Messgeräts (100) relativ zur Positionsmarkierung (149) zur Berücksichtigung der perspektivischen Position des Kamerasensors relativ zur Wand und Ermitteln der Position des Messgeräts (100) an der Wand (105) basierend auf der Perspektivenkorrektur.

6. Verfahren (300) nach einem der voranstehenden Ansprüche, wobei die Positionsmarkierung (149) als eine ArUco-Markierung (158) oder eine ChArUco-Markierung (158) ausgebildet ist.

7. Verfahren (300) nach einem der voranstehenden Ansprüche, wobei die Positionsmarkierung (149) durch eine an der Wand (105) ausgebildete Markierung gebildet ist und umfasst: Tapetenmuster, Lichtschalter (162), Steckdose, Fenster, Möbel.

8. Verfahren (300) nach einem der voranstehenden Ansprüche, wobei der Kamerasensor (147) an einer Positionierungsvorrichtung (156) angeordnet ist, und wobei über die Positionierungsvorrichtung (156) der Kamerasensor (147) in der vorbestimmten Perspektivposition relativ zur Wand (105) positioniert ist.

9. Trainingsdatensatz (143) für ein Training einer künstlichen Intelligenz (125) eines Messgeräts (100) zur Wanddiagnostik, wobei der Trainingsdatensatz (143) durch das Verfahren (300) zum Erzeugen eines Trainingsdatensatzes
(143) zum Trainieren einer künstlichen Intelligenz (125) zum Betreiben eines Messgeräts (100) nach einem der voranstehenden Ansprüche 1 bis 8 erzeugt wurde.

10. Computerimplementiertes Verfahren (400) zum Trainieren einer künstlichen Intelligenz (125) eines Messgeräts (100) zur Wanddiagnostik, umfassend:

Bereitstellen (401) eines Trainingsdatensatzes (143) durch Ausführen des Verfahrens (300) zum Erzeugen eines Trainingsdatensatzes (143) nach einem der voranstehenden Ansprüche 1 bis 8;
Trainieren (403) der künstlichen Intelligenz (125) basierend auf dem Trainingsdatensatz (143) zum Ausführen einer Objekterkennung eines in einer Wand (105) ausgebildeten Objekts (113), wobei die Objekterkennung wenigstens eine Objektdetektion umfasst.

11. Recheneinheit (151), die eingerichtet ist, das Verfahren (300) zum Erzeugen eines Trainingsdatensatzes (143) zum Trainieren einer künstlichen Intelligenz (125) zum Betreiben eines Messgeräts (100) nach einem der voranstehenden Ansprüche 1 bis 8 und/oder das Verfahren (400) zum Trainieren einer künstlichen Intelligenz (125) eines Messgeräts (100) nach Anspruch 10 auszuführen.

12. Computerprogrammprodukt (500) umfassend Befehle, die bei der Ausführung des Programms durch eine Datenverarbeitungseinheit diese veranlassen, das Verfahren (300) zum Erzeugen eines Trainingsdatensatzes (143) zum Trainieren einer künstlichen Intelligenz (125) zum Betreiben eines Messgeräts (100) nach einem der voranstehenden Ansprüche 1 bis 8 und/oder das Verfahren (400) zum Trainieren einer künstlichen Intelligenz (125) eines Messgeräts (100) nach Anspruch 10 auszuführen.

**Fig. 1**

EP 4 618 030 A1

Fig. 2

EP 4 618 030 A1

Fig. 3

# Fig. 4

a)

b)

# Fig. 5

a)

b)

# Fig. 6

EP 4 618 030 A1

# Fig. 7

a)

149,160    149,162    105    600

153

100

149, 158

b)

149,160    149,162    105    600

113    113

# Fig. 8

a)

164 — 166
168

b)

164 — 166
166

c)

168
168

Fig. 9

# Fig. 10

Fig. 11

Fig. 12

Europäisches
Patentamt

European
Patent Office

Office européen
des brevets

**EUROPÄISCHER RECHERCHENBERICHT**

Nummer der Anmeldung

EP 25 16 0010

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 11 055 532 B2 (FARO TECH INC [US]) 6. Juli 2021 (2021-07-06) * Zusammenfassung * * Abbildungen 1-11 * * Spalte 1 - Spalte 13 * * Spalte 19 - Spalte 24 * ----- | 1-12 | INV. G06V10/24 G06V10/774 G06V20/52 |
| A | US 10 447 991 B1 (ZWEIGLE OLIVER [DE] ET AL) 15. Oktober 2019 (2019-10-15) * Zusammenfassung * * Spalte 1 - Spalte 14 * * Abbildungen 1-9 * ----- | 1-12 | |

RECHERCHIERTE SACHGEBIETE (IPC)

G06V

Der vorliegende Recherchenbericht wurde für alle Patentansprüche erstellt

| Recherchenort | Abschlußdatum der Recherche | Prüfer |
|---|---|---|
| Den Haag | 5. Juni 2025 | Karwe, Markus |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 16 0010

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2025

| Im Recherchenbericht angeführtes Patentdokument | Datum der Veröffentlichung | Mitglied(er) der Patentfamilie | Datum der Veröffentlichung |
|---|---|---|---|
| US 11055532 B2 | 06-07-2021 | KEINE | |
| US 10447991 B1 | 15-10-2019 | KEINE | |

EPO FORM P0461

Für nähere Einzelheiten zu diesem Anhang : siehe Amtsblatt des Europäischen Patentamts, Nr.12/82